# EUROPEAN PATENT APPLICATION

(11) **EP 0 627 569 A1**
(43) Date of publication of application: **07.12.1994**
(21) Application number: 94303272.2
(22) Date of filing: 06.05.1994
(51) Int. Cl.: F16B 37/14, F16B 33/06, F16B 37/00

(54) **Nut**

(30) Priority: 10.05.1993 JP 23965/93
(71) Applicant: EMHART INC., Newark, Delaware 19711 (US)
(72) Inventor: Kanie, Hideaki, Toyohashi City, Aichi-Ken (JP)
(74) Representative: Prior, Nicholas John

(57) **Abstract**

A plastic nut (1) for attachment to a threaded stud (12) so that the threaded portion (14) is screwed into the aperture (4) through the nut (1) in which edges formed by means of ridges (5) or grooves scrape off during screwing coating (13) covering the periphery of the threaded stud (12); the sides of the nut being formed with openings (7) extending outwardly from the edges of the aperture (4) to remove coating (13) scraped from the threaded stud to the outside.

## Description

The present invention relates to a plastic nut which is capable of being attached to a threaded stud so that the threaded portion is screwed into an aperture formed through the nut in which edges are formed by means of ridges or grooves to scrape off during screwing a coating covering the periphery of the threaded stud.

There is a known plastic nut which is capable of being attached to a threaded stud so that the threaded portion is screwed into an aperture formed through the nut in which edges are formed by means of ridges or grooves to scrape off during screwing a coating covering the periphery of the threaded stud. Such a nut is widely in use for attaching various components to a threaded stud welded e.g. to a vehicle body panel. When such a plastic nut is used, a coating formed by paint applied to the threaded stud is scraped off by the edges formed in the aperture but scraped coating can lodge in spaces in the aperture or get in roots of the inner threaded portion of the nut and this results in unsatisfactory fastening of the nut.

Accordingly, it is an object of the present invention to provide a plastic nut which is capable of maintaining satisfactory fastening of the nut even when the coating of threaded stud is scraped off.

According to the present invention, we provide a plastic nut which is capable of being attached to a threaded stud so that the threaded portion is screwed into an aperture formed through the nut in which edges are formed by means of ridges or grooves to scrape off during screwing a coating covering the periphery of the threaded stud;
characterised in that the sides of the nut are formed with openings extending outwardly from the edges of the aperture to remove the scraped coating of the threaded stud to the outside.

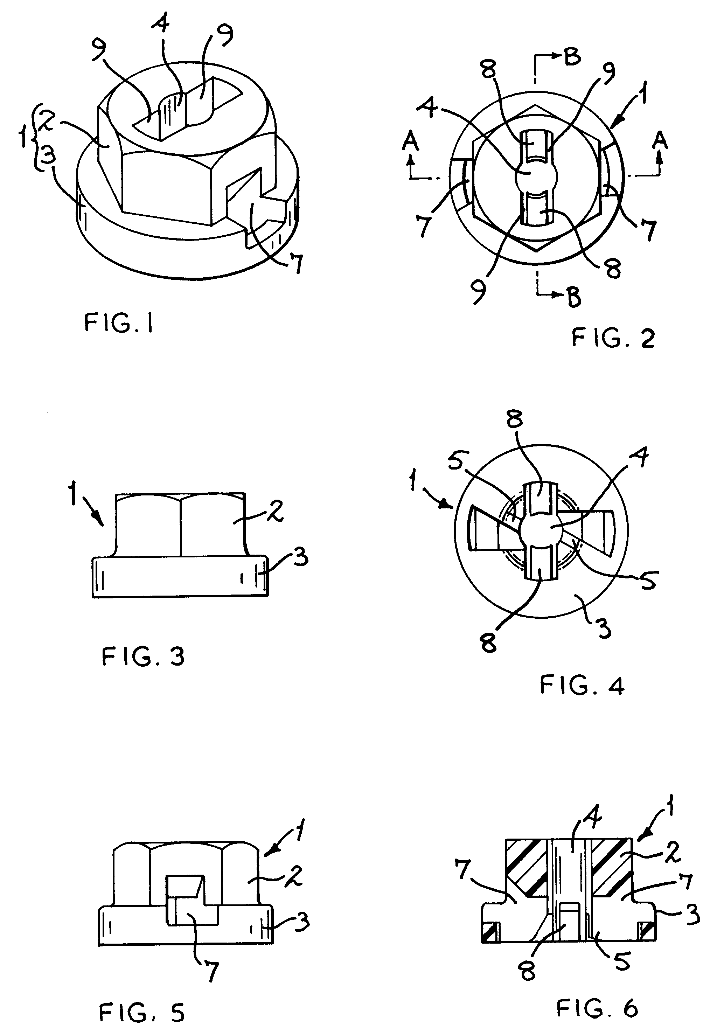

In order that the invention can be better understood, a preferred embodiment will now be described in greater detail by way of example with reference to the accompanying drawings in which:-
Figure 1 is a perspective view of a plastic nut according to the present invention;
Figure 2 is a plan view of the nut of Figure 1;
Figure 3 is a front view of the nut of Figure 1;
Figure 4 is a bottom view of the nut of Figure 1;
Figure 5 is a side view of the nut of Figure 1;
Figure 6 is a sectional view taken along the line A-A of Figure 2;
Figure 7 is a sectional view taken along the line B-B of Figure 2;
Figure 8 shows a threaded stud covered by a coating, and
Figures 9 and 10 illustrate how the coating is removed by the use of the plastic nut of Figure 1;
Figure 10 being the bottom view of Figure 9.

The plastic nut (1) according to the present invention comprises a body (2) having a hexagonal form to allow the use of a tool such as an impact wrench and a flange (3) disposed at the bottom of the nut and integrally moulded with the body (2). An aperture (4) pierces the centres of the body (2) and the flange (3). The aperture (4) may either be threaded internally or can be a plain hole to be threaded when screwed on to the threaded stud.

At the bottom, the aperture (4) is formed with ridges (5) which form edges to scrape off a coating covering the periphery of the threaded stud when the nut is screwed to the threaded stud. The ridges (5) facing each other diametrically make a pair in the illustrated embodiment. Inasmuch as the ridges form edges to scrape off the coating, they may be provided as grooves having such edges.

According to the present invention, the side of the nut is provided with openings (7) extending outwardly from points adjacent to the ridges (5) formed with such edges. Through the openings (7), the coating scraped off from the threaded stud by the ends of the ridges (5), (the edges), is removed to the outside. In the aperture (4) on the bottom of the nut, a pair of engagement pawls (8), for temporary fixing is formed. They allow the nut to be temporarily fixed to the threaded stud to facilitate its attachment. For moulding the engagement pawls (8), holes (9) are provided adjacent to the aperture (4).

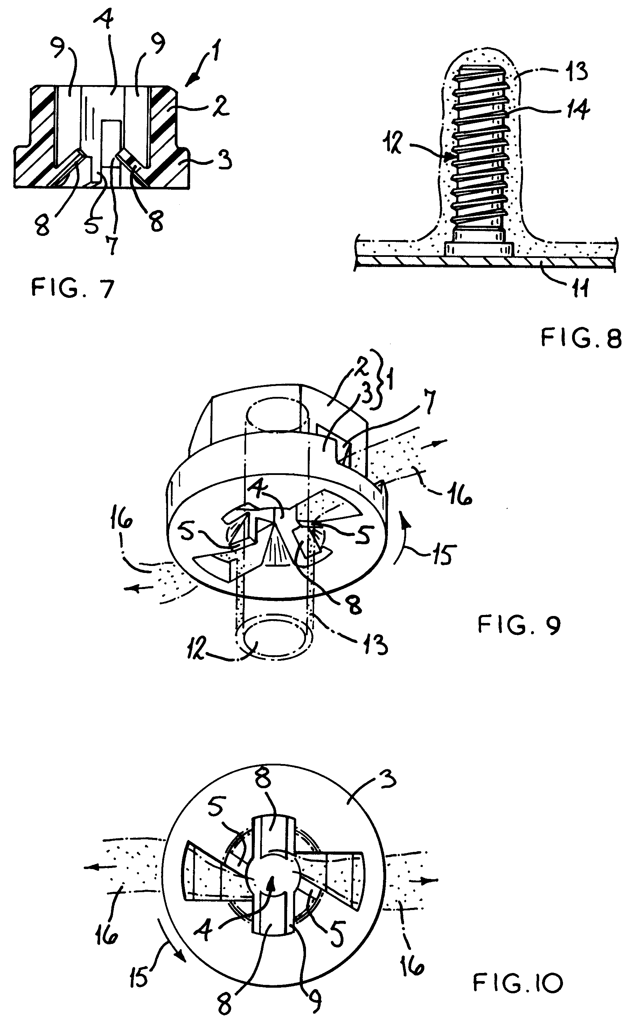

In Figure 8, a threaded stud (12) welded to a panel (11) is coated with paint including a threaded portion (14). The plastic nut (1) is attached to this threaded stud (12). In attaching the nut, the bottom of the aperture (4) is held on the tip of the threaded stud (12) and the engagement pawls (8) are pressed in so as to come into engagement with the tip of the threaded stud (12), thus accomplishing temporary fixing. After being fixed temporarily, the hexagonal body (2) is pressed to the stud while being rotated by means of an impact wrench or the like and the nut (1) is screwed round the threaded stud (12) while being tapped. During the screwing, the ends of the ridges (5), (the edges), scrape off the coating (13) covering the periphery of the threaded stud (12). For instance, when the nut (1) is rotated in the direction indicated by an arrow (15), the edges of the ridges (5) scrape off the coating (13) on the periphery of the threaded stud (12), The scraped coatings (16) from the threaded stud are removed by passing to the outside through the openings (7) provided in the sides of the nut (1), leading from the edges of the aperture to the outside. Therefore, when the coating is scraped off the threaded stud, the scraped coating is prevented from lodging in spaces in the aperture or from getting in the roots of the inner threaded portion, so that satisfactory fastening of the nut is not impaired.

## Claims

1. A plastic nut which is capable of being attached to a threaded stud so that the threaded portion is screwed into an aperture formed through the nut in which edges are formed by means of ridges or grooves to scrape off during screwing a coating covering the periphery of the threaded stud during; characterised in that the sides of the nut are formed with openings extending outwardly from the edges of the aperture to remove the scraped coating of the threaded stud to the outside.

2. The plastic nut according to Claim 1, wherein the aperture is formed with a pair of engagement pawls at the bottom of the nut for temporary fixing.
